# EUROPEAN PATENT APPLICATION

(11) **EP 4 319 118 A1**
(43) Date of publication of application: **07.02.2024**
(21) Application number: 22794875.9
(22) Date of filing: 25.04.2022
(51) Int. Cl.: H04M 1/725, G06F 16/00, G06F 9/451

(54) **INFORMATION INTERACTION METHOD AND APPARATUS, AND ELECTRONIC DEVICE**

(30) Priority: 25.04.2021 CN 202110450837
(71) Applicant: Beijing Zitiao Network Technology Co., Ltd., Beijing 100190 (CN)
(72) Inventor: LI, Zhiqin, Beijing 100190 (CN); QI, Hongye, Beijing 100190 (CN); ZHAO, He, Beijing 100190 (CN)
(74) Representative: Dentons UK and Middle East LLP
(86) International application number: PCT/CN2022/089122
(87) International publication number: WO 2022/228405

(57) **Abstract**

Disclosed in the embodiments of the present disclosure are an information interaction method and apparatus, and an electronic device. A particular embodiment of the method comprises: a first service interface receiving index information, wherein the index information indicates part of the information content of a service information body that is presented in a second service interface, the service information body being an information unit for organizing service information; and according to the part of the information content acquired on the basis of the index information, displaying, in the first service interface, the part of the information content and/or related information of the part of the information content. Therefore, a new information interaction mode is provided.

## Description

The present application claims priority to Chinese Patent Application No. 202110450837.6, titled "INFORMATION INTERACTION METHOD AND APPARATUS, AND ELECTRONIC DEVICE", filed on April 25, 2021 with the National Intellectual Property Administration, PRC, which is incorporated herein by reference in its entirety.

### FIELD

The present disclosure relates to the technical field of the Internet, and in particular to an information interaction method and apparatus, and an electric device.

### BACKGROUND

With the development of the Internet, more and more users use terminal devices to implement various functions. For example, a user may use an instant messaging application to perform instant messaging, and may also use an online document application to perform collaborative communication.

### SUMMARY

This Summary section is provided to introduce concepts in a simplified form, which are described in detail in the Detailed Description section. This Summary section is not intended to identify key features or essential features of the claimed technical solution, nor intended to limit the scope of the claimed technical solution.

In the first aspect, an information interaction method is provided according to an embodiment of the present disclosure, which includes: receiving index information through a first service interface, where the index information indicates a partial information content of a service information body displayed in a second service interface, and the service information body is an information unit for organizing service information; and displaying, based on the partial information content acquired based on the index information, the partial information content and/or related information of the partial information content in the first service interface.

In a second aspect, an information interaction method is provided according to an embodiment of the present disclosure, which includes: displaying, in a second service interface, a service information body, where the service information body is an information unit for organizing service information; selecting partial information content from the service information body; and generating index information based on information identification of the selected partial information content, to process the partial information content based on the index information.

In a third aspect, an information interaction method is provided according to an embodiment of the present disclosure, which includes: receiving a first acquisition request or a second acquisition request sent by a third service interface; acquiring first service data from a first service server based on first index information carried in the first acquisition request; acquiring second service data from a second service server based on second index information carried in the second acquisition request; acquiring a first style parameter, where the first style parameter indicates a display style when displaying the first service data and the second service data in the third service interface; feeding back, in response to receiving the first acquisition request, first display information to a third service interface, where the first display information includes at least one of the first service data, the first style parameter, and first service display data, and the first service display data is generated based on the first service data and the first style parameter; and feeding back, in response to receiving the second acquisition request, second display information to the third service interface, where the second display information includes at least one of the first service data, the first style parameter, and second service display data, and the second service display data is generated based on the second service data and the first style parameter.

In a fourth aspect, an information interaction method is provided according to an embodiment of the present disclosure, which includes: receiving a first display request, where the first display request is used to display first service data of a first service in a third service interface, where the first service has a service type other than that of the third service; sending a display style parameter acquisition request to a server based on the first display request, where the display style parameter acquisition request carries first index information, and the first index information indicates the first service data; receiving first display information returned by the server, where the first display information includes at least one of the first service data, the first style parameter, and first service display data, and the first service display data is generated based on the first service data and the first style parameter; and displaying based on the first display information.

In the fifth aspect, an information interaction apparatus is provided according to an embodiment of the present disclosure, which includes: a receiving unit, configured to receive index information through a first service interface, where the index information indicates a partial information content of a service information body displayed in a second service interface, and the service information body is an information unit for organizing service information; and a display unit, configured to display, based on the partial information content acquired based on the index information, the partial information content and/or related information of the partial information content in the first service interface.

In a sixth aspect, an information interaction apparatus is provided according to an embodiment of the present disclosure, which includes: a presenting unit, configured to display, in a second service interface, a service information body, where the service information body is an information unit for organizing service information; a selecting unit, configured to select partial information content from the service information body; and a generating unit, configured to generate index information based on information identification of the selected partial information content, to process the partial information content based on the index information.

In a seventh aspect, an information interaction apparatus is provided according to an embodiment of the present disclosure, which includes: a receiving unit, configured to receive a first acquisition request or a second acquisition request sent by a third service interface; a first acquiring unit, configured to acquire first service data from a first service server based on first index information carried in the first acquisition request; a second acquiring unit, configured to acquire second service data from a second service server based on second index information carried in the second acquisition request; a presenting unit, configured to acquire a first style parameter, where the first style parameter indicates a display style when displaying the first service data and the second service data in the third service interface; a first feedback unit, configured to feed back, in response to receiving the first acquisition request, first display information to a third service interface, where the first display information includes at least one of the first service data, the first style parameter, and first service display data, and the first service display data is generated based on the first service data and the first style parameter; and a second feedback unit, configured to feed back, in response to receiving the second acquisition request, second display information to the third service interface, where the second display information includes at least one of the first service data, the first style parameter, and second service display data, and the second service display data is generated based on the second service data and the first style parameter.

In an eighth aspect, an information interaction apparatus is provided according to an embodiment of the present disclosure, which includes: a first receiving unit, configured to receive a first display request, where the first display request is used to display first service data of a first service in a third service interface, where the first service is of a service type other than the third service; a sending unit, configured to send a display style parameter acquisition request to a server based on the first display request, where the display style parameter acquisition request carries first index information, and the first index information indicates the first service data; a second receiving unit, configured to receive first display information returned by the server, where the first display information includes at least one of the first service data, the first style parameter, and first service display data, and the first service display data is generated based on the first service data and the first style parameter; and a display unit, configured to display based on the first display information.

In a ninth aspect, an electronic device is provided according to an embodiment of the present disclosure, which includes: one or more processors; and a storage device configured to store one or more programs. The one or more programs, when executed by the one or more processors, cause the one or more processors to perform the information interaction method as described in the first aspect or the second aspect or the third aspect or the fourth aspect.

In a tenth aspect, a computer-readable medium is provided according to an embodiment of the present disclosure, including a computer program stored thereon, where the program, when executed by a processor, performs steps of the information interaction method as described in the first aspect or the second aspect or the third aspect or the fourth aspect.

With the information interaction method, apparatus, and electronic device according to the embodiments of the present disclosure, the index information is received through the first service interface, and the index information indicates the second service interface to display the partial information content of the service information body, and the partial information content may be acquired based on the index information. Then, based on the partial information content, the partial information content and/or related information of the partial information content is displayed in the first service interface. In this way, information transmission can be performed at the granularity of the partial information content, reducing the data amount of information transmission and reducing the difficulty of information transmission, thereby improving the circulation of information in the second service. Moreover, the partial information content and/or related information is displayed in the first service interface, the partial information content and/or related information can be acquired without having to jump to the second service interface, thereby omitting a step of jumping to the second service interface, reducing the difficulty of displaying information and reducing the resources consumed for displaying information.

### BRIEF DESCRIPTION OF THE DRAWINGS

The above and other features, advantages and aspects of the various embodiments of the present disclosure will become more apparent with reference to the following detailed description in conjunction with the drawings. Throughout the drawings, the same or similar reference numerals denote the same or similar elements. It should be understood that the drawings are schematic and that elements and elements are not necessarily drawn to scale.
Figure 1 is a flowchart of an information interaction method according to an embodiment of the present disclosure;
Figures 2A and 2B are schematic diagrams of an application scenario of an information interaction method according to the present disclosure;
Figure 3 is a flowchart of an information interaction method according to another embodiment of the present disclosure;
Figure 4 is a flowchart of an information interaction method according to another embodiment of the present disclosure;
Figure 5 is a flowchart of an information interaction method according to another embodiment of the present disclosure;
Figure 6 is a schematic structural diagram of an information interaction apparatus according to an embodiment of the present disclosure;
Figure 7 is a schematic structural diagram of an information interaction apparatus according to another embodiment of the present disclosure;
Figure 8 is a schematic structural diagram of an information interaction apparatus according to another embodiment of the present disclosure;
Figure 9 is a schematic structural diagram of an information interaction apparatus according to another embodiment of the present disclosure;
Figure 10 is an exemplary system architecture to which an information interaction method according to an embodiment of the present disclosure may be applied; and
Figure 11 is a schematic diagram of a basic structure of an electronic device according to an embodiment of the present disclosure.

### DETAILED DESCRIPTION OF THE EMBODIMENTS

Embodiments of the present disclosure will be described in more detail below with reference to the drawings. Although some embodiments of the present disclosure are shown in the drawings, it is to be understood that the present disclosure may be implemented in various forms, and should not be interpreted as limited to the embodiments described herein. On the contrary, these embodiments are provided for a more thorough and complete understanding of the present disclosure. It is to be understood that the drawings and embodiments of the present disclosure are only for illustrative purposes and are not intended to limit the protection scope of the present disclosure.

It is to be understood that the various steps described in the method embodiments of the present disclosure may be performed in different orders and/or in parallel. Furthermore, a method embodiment may include additional steps and/or omit some illustrated steps. The scope of the present disclosure is not limited in this regard.

The term "including" and variations thereof herein are non-inclusive, that is, "including but not limited to". The term "based on" means "based at least in part on." The term "one embodiment" means "at least one embodiment". The term "another embodiment" means "at least one another embodiment". The term "some embodiments" means "at least some embodiments". Related definitions of other terms will be given in the description below.

It is to be noted that the terms "first", "second" and the like used in the present disclosure are only used to distinguish different devices, modules or units, and are not intended to define the order or interdependence of functions performed by these devices, modules or units.

It is to be noted that the terms "one" and "multiple" used in the present disclosure are schematic rather than restrictive, and those skilled in the art should understand that, unless otherwise explicitly pointed out in the context, these terms should be understood as "one or more".

It is to be noted that the content of a response in the terms "in response to" used in the present disclosure may be a sufficient and necessary condition for an action triggered by the response, or may be a necessary but not sufficient condition for an action triggered by the response.

The names of messages or information interacted between multiple devices in the embodiment of the present disclosure are only used for illustrative purposes, and are not used to limit the scope of these messages or information.

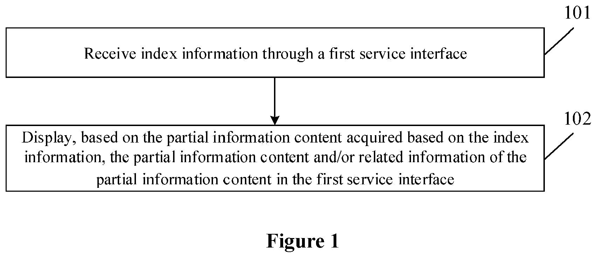

Reference is made to Figure 1, which is a schematic flowchart of an information interaction method according to an embodiment of the present disclosure. As shown in Figure 1, the method may include the following steps 101 to 102.

In step 101, index information is received through a first service interface.

In an embodiment, the service interface may be configured to display service-related information. The division between services may be pre-defined. It may be understood that in the present disclosure, the first serviceor second service is indicated for the convenience of description, and does not constitute a limitation on the content of the service.

In some application scenarios, an application may include multiple services. For example, an office application may include at least one of the following but not limited to an instant messaging service, an email service, an online document service, a multimedia conference service, and a calendar service. The foregoing application may be any type, which is not limited here. For example, the foregoing application may be an instant messaging application, a video playing application, a mail application, and the like.

In some application scenarios, the above services may be divided by application. For example, an online document application and an instant messaging application may serve as different services.

In the embodiment, service content may be displayed in the service interface, and the service content may be displayed in units of service information bodies. In other words, the service information body may be an information unit for organizing service information.

In some application scenarios, in the instant messaging service, the service information body may be a conversation. In the online document service, the service information body may be a document. In the email service, the service information body may be an email.

In the embodiment, the partial information content of the service information body may be a result of disassembling the service information body. The partial information content may be understood as a manner of displaying in a more fine-grained manner.

In some application scenarios, a partial information content of a conversation may be a message in a conversation. A partial information content of a document may be a part of the content of the document (such as words, sentences or paragraphs). A partial information content of an email may be understood as part of the content in the email, such as the email body or email title, or, for example, words, sentences or paragraphs in the email body.

In the embodiment, the index information may indicate the partial information content of the service information body displayed in the second service interface. For example, the index information may indicate a paragraph (that is, the partial information content) in an online document (that is, the service information body).

In the embodiment, the first service interface may receive the index information in various forms.

For example, the user may copy the index information from the second service interface to the first service interface.

For another example, the user may select the partial information content in the second service interface, and select a sharing object (for example, a group "lunch group"), to send the index information of the selected partial information content to the sharing object, and the first service interface of displaying the sharing object may receive the index information.

For example, in response to receiving the index information, the method may include: sending the index information to a first electronic device once receiving the index information, that is, receiving the index information is a sufficient and necessary condition for sending the index information to the first electronic device. The receiving the index information may also be a necessary but not sufficient condition for sending the index information to the first electronic device, that is, after receiving the index information, it is further determined whether another condition is met, such as whether a trigger operation is further received, the index information is sent to the first electronic device only when the another condition is further met.

In step 102, based on the partial information content acquired based on the index information, the partial information content and/or related information of the partial information content is displayed in the first service interface.

In the embodiment, the partial information content may be acquired based on the index information, and at least one of the partial information content and related information of the partial information content may be displayed in the first service interface based on the partial information content, which is not limited thereto.

For example, the partial information content may be part of service data, such as several conversation messages, a piece of text in an online document. The related information of the partial information content may be additional information related to the service data, for example, a conversation user identification of the conversation information, and an owner identification of the online document.

In some application scenarios, a conversation message in an instant messaging, and/or a piece of text in an email, etc. are displayed in an online document. A piece of text in an online document and/or a piece of text of an email may be displayed in the instant messaging service interface.

In some application scenarios, the conversation user identification and index information of the conversation message are displayed in the online document. The conversation message is displayed in response to the user triggering the index information.

It is to be noted that, with the information interaction method according to the embodiment, the index information is received through the first service interface, and the index information indicates the second service interface to display the partial information content of the service information body, and the partial information content may be acquired based on the index information. Then, based on the partial information content, the partial information content and/or related information of the partial information content is displayed in the first service interface. In this way, information transmission can be performed at the granularity of the partial information content, reducing the data amount of information transmission and reducing the difficulty of information transmission, thereby improving the circulation of information in the second service. Moreover, the partial information content and/or related information is displayed in the first service interface, the partial information content and/or related information can be acquired without having to jump to the second service interface, thereby omitting a step of jumping to the second service interface, reducing the difficulty of displaying information and reducing the resources consumed for displaying information.

In some conventional arts, there are many barriers to information communication between various service scenarios. For example, if a user wishes to provide conversation information to an online document for reference by users of the online document, the user may need to take a screenshot and then paste the picture to the online document. If the user wishes to provide a certain part of the online document to the instant messaging service scenario for reference, the user needs to provide the whole online document to the conversation of the instant messaging scenario.

Therefore, with the information interaction method according to the embodiment, a fine-grained information sharing method can be provided by sharing the partial information content of the service information body, thereby enabling convenient and quick information exchange.

In some embodiments, the above index information may be generated based on information identification of the partial information content and is different from the information identification.

Here, the information identification may correspond to the information content. The arrangement or generation rule of the information identification may be service-related.

It is to be noted that the index information is generated based on the identification information. Providing the user device with index information as a transmission medium instead of identification information can prevent reverse processing based on the identification information, improving information security.

**In** some embodiments, the method may further include: sending index information to a first electronic device; receiving the partial information content and/or related information of the partial information content returned by the first electronic device based on the index information.

Here, the first electronic device may acquire, based on the index information, the partial information content and/or the related information of the partial information content indicated by the index information from a second service server.

It is to be noted that the first electronic device may include a terminal or a server. By means of the interaction between the first electronic device and the second service server, the communication traffic of the electronic device displaying the first service interface can be reduced and the response speed can be improved.

In some embodiments, the index information corresponds to a partial information content identification or corresponds to a storage address of the information identification, and the partial information content identification indicates partial information content data.

In some embodiments, the first electronic device acquires the partial information content and/or related information of the partial information content indicated by the index information from the second service server based on the index information in the following way: the first electronic device sends a partial information content acquisition request to the second service server, and the second service server determines the partial information content identification corresponding to the index information, and acquires the partial information content and/or related information of the partial information content from partial information content data indicated by the partial information content identification.

In some embodiments, in response to determining that the partial information content indicated by the partial information content identification changes, the displayed partial information content and/or related information of the partial information content is updated based on the changed partial information content data.

Here, the index information indicates the partial information content identification, and the partial information content identification remains unchanged, and specific data indicated by the partial information content identification may change.

For example, in a scenario of sharing a conversation message to an online document, if feedback information (such as emoticon reply) of the conversation message in the instant messaging interface changes, the change may be updated to an area of displaying the conversation message in the online document in time.

It is to be noted that when the partial information content changes due to the operation of the second service interface, this change may be updated in time to the area displaying the partial information content in the first service interface, so that the user can automatically acquire the update state of the second service data in the first service interface, thereby providing the user with the latest and most accurate second service data, and preventing the user from jumping to the second service interface for performing a viewing operation, reducing operation steps and improving information acquisition efficiency.

In some embodiments, the displaying the partial information content and/or related information of the partial information content in the first service interface based on the partial information content acquired based on the index information may include: displaying an interaction control related to the second service in the first service interface.

Here, the interaction control includes at least one of the following but are not limited to: a viewing control, a jump control, a feedback control and a translation control.

In some application scenarios, an interaction control related to the instant messaging service may be displayed in an online document interface.

In some embodiments, the method further includes: displaying the partial information content in the first service interface in response to detecting a trigger operation on the viewing control.

Here, the related information of partial content information may first be displayed in the first service interface. Then, in response to detecting a trigger operation on the viewing control, the partial information content may be displayed in the first service interface.

In some application scenarios, related information "You have received a conversation message between A and B", index information, and the viewing control may be displayed in the online document interface. In response to the trigger operation on the viewing control, the conversation message (that is, the partial information content) between A and B is displayed.

In some embodiments, the method further includes: displaying the second service interface where the partial information content is located in response to detecting a trigger operation on the jump control.

In some application scenarios, related information "You have received a conversation message between A and B", index information, and the jump control may be displayed in the online document interface. In response to a trigger operation on the jump control, it is jumped to an instant messaging interface displaying the conversation message (that is, the partial information content) between A and B.

In some embodiments, the method further includes: receiving first feedback information inputted in the first service interface in response to detecting a trigger operation on the feedback control, and sending the first feedback information to the second service interface to update the second service interface.

In some application scenarios, the conversation message (that is, the partial information content) between A and B may be displayed in the online document interface, and the user may reply to the conversation message or send image information in the online document. Then, the feedback of the user on the conversation message in the online document may be sent to the second service interface. Thus, content displayed in the second service interface may be updated.

In some embodiments, the method further includes: displaying the partial information content and/or related information of the partial information content in a target language in response to detecting a trigger operation on the translation control.

In some application scenarios, related information "You have received a conversation message between A and B" (for example, the source language is Chinese), index information, and the translation control may be displayed in the online document interface. In response to a trigger operation on the translation control, the related information is displayed in a target language for translation (for example, English) in the first service interface.

In some application scenarios, the partial information content and/or related information of the partial information content may be displayed in the form of an information card. The information card may include the interaction control. Here, the information card may be understood as a collection of information. Since information is generally displayed in a pre-set format collectively, the collection of information may be called an information card. It may be understood that the description using the information card does not constitute a limitation on the display form of information.

In some embodiments, the related information of the partial information content includes at least one of the following: a user identification associated with the partial information content, and second feedback information for the partial information content.

Here, specific items included in the related information of the partial information content may be set according to actual application scenarios, and are not limited here.

Here, the user identification associated with the partial information content may include, for example, a conversation user identification of a conversation interacting party, or an online document owner identification of the online document, and the like.

Here, the second feedback information for the partial information content may include feedback information for the partial information content inputted through the second service interface.

In some embodiments, the first service interface includes at least one of the following: an instant messaging conversation interface, an online document interface, an email interface, a schedule information interface, and a conference information interface.

In some embodiments, the service information body includes at least one of the following: an instant messaging conversation, an online document, an email, schedule information, and conference information.

Here, the first service interface (which may be a receiving interface) may be one of various service interfaces. The second service interface (which may be a sending interface) may also be one of various service interfaces.

Therefore, fine-grained information content may be shared among various service scenarios, so that information exchange may be realized between various service scenarios, improving the information interaction efficiency.

In some embodiments, the method further includes: displaying a service information body in the second service interface; selecting partial information content from the service information body; and generating index information based on information identification of the selected the partial information content.

In some embodiments, the step of selecting partial information content from the service information body includes: selecting at least two partial information contents from the service information body.

For example, at least two conversation messages may be selected from an instant messaging conversation interface.

In some embodiments, the step of generating index information based on information identification of the selected the partial information content may include: generating, based on the information identification of each of the selected partial information contents, first type index information for the partial information content, where the first type index information is in one-to-one correspondence with the partial information content.

For example, at least two conversation messages are selected from the instant messaging conversation interface, for example, a first conversation message and a second conversation message. First first type index information may be generated for the first conversation message, and second first type index information may be generated for the second conversation message. the partial message content is in one-to-one correspondence with the first type index information.

It is be noted that the one-to-one correspondence between the index information and partial message content may present a clear correspondence to the user, making it easier for the user to view a single piece of information. For the scenario where the user needs to view a single piece of information without viewing all the information, the one-to-one correspondence between the index information and partial messages can prevent the user from obtaining irrelated information when obtaining the desired information, reducing the amount of communication data.

In some embodiments, the step of generating index information based on the information identification of the selected partial information content may include: generating second type index information based on information identification of each of the selected at least two partial information contents, where the second type index information corresponds to the selected at least two partial information contents.

For example, at least two conversation messages are selected from the instant messaging conversation interface, for example, a first conversation message and a second conversation message. The second type index information may be generated for the first conversation message and the second conversation message. The second type index information may be used to indicate all selected partial message contents.

It is to be noted that generating one piece of index information for multiple selected partial message contents can reduce the number of operations required for the user to share the index information, improving operation efficiency.

In some embodiments, the second service includes an instant messaging service, and the first service includes an online document service. The step 101 may include: receiving index information indicating at least one conversation message through an online document interface, and acquiring conversation message content of the at least one conversation message and/or related information of the conversation message content. The step 102 may include: displaying the conversation message content of the at least one conversation message and/or the related information of the conversation message content in the online document interface based on the conversation message content acquired based on the index information.

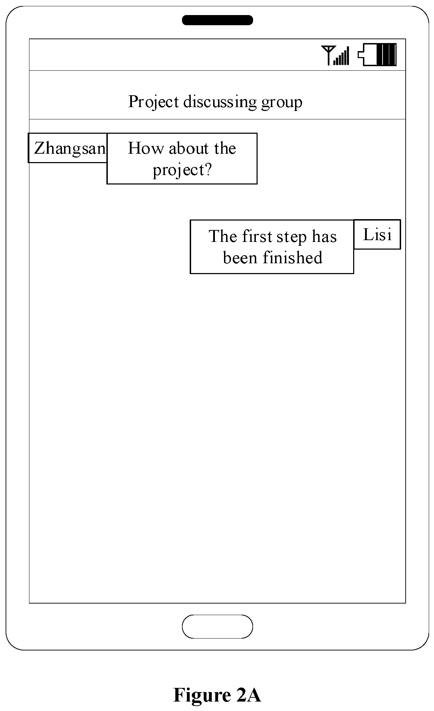

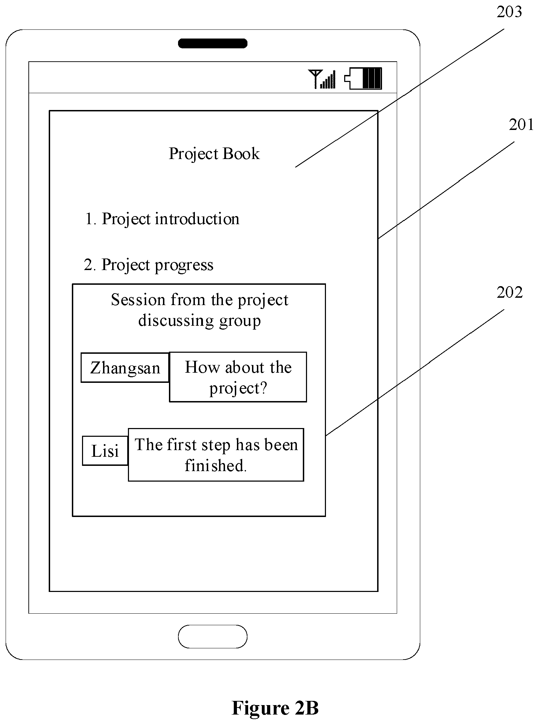

Reference is made to Figure 2A and Figure 2B, which show an exemplary application scenario according to an embodiment.

Figure 2A shows that a conversation message is displayed in a conversation interface of an instant messaging service.

The conversation message in the instant messaging conversation interface may be shared to the online document. Here, the conversation message may be shared to the online document by any group member in a project discussing group.

Figure 2B shows an online document interface of an online document service. The online document interface displays an online document "Project Book". A first display area of the online document interface displays a title "Project Book" and document content "1. Project Introduction" and "2. Project Progress". For example, a part of the online document interface 201 other than a second display area 202 may serve as a first display area 203.

The second display area 202 of the online document interface may display a conversation message in the conversation interface.

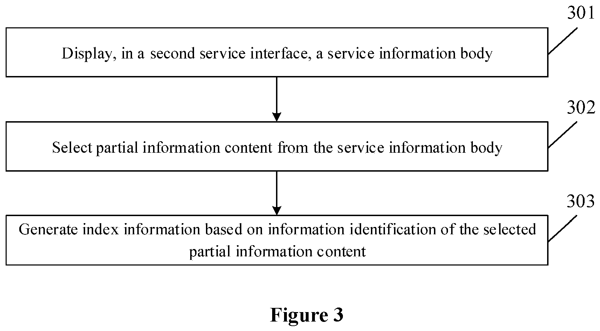

Reference is made to Figure 3, which shows a flow of an information interaction method according to another embodiment of the present disclosure. As shown in Figure 3, the information interaction method includes the following steps 301 to 303.

In step 301, a service information body is displayed in a second service interface.

Here, the service information body is an information unit for organizing service information.

In the embodiment, the service interface may be used to display service-related information. The division between services may be pre-defined. It may be understood that in the present disclosure, the first or second service is indicated for the convenience of description, and does not constitute a limitation on the content of the service.

In some application scenarios, an application may include multiple services. For example, an office application may include at least one of the following but not limited to an instant messaging service, an email service, an online document service, a multimedia conference service, and a calendar service. The application may be any type, which is not limited here. For example, the applications may be an instant messaging application, a video playing application, an email application, and the like.

In some application scenarios, the above services may be divided by application. For example, an online document application and an instant messaging application may serve as different services.

In the embodiment, service content may be displayed in the service interface, and the service content may be displayed in units of service information bodies. In other words, the service information body may be the information unit for organizing service information.

In some application scenarios, in the instant messaging service, the service information body may be a conversation. In the online document service, the service information body may be a document. In the email service, the service information body may be an email.

In step 302, partial information content is selected from the service information body.

In the embodiment, the partial information content of the service information body may be a result of disassembling the service information body. The partial information content may be understood as a manner of displaying in a fine-grained manner.

In some application scenarios, the partial information content of the conversation may be a conversation message. The partial information content of the document may be part of content of a document (such as words, sentences or paragraphs). The partial information content of the email may be understood as part of content in the email, such as the email body or email title, or, for example, words, sentences or paragraphs in the email body.

In step 303, index information is generated based on information identification of the selected partial information content.

In some embodiments, the index information corresponds to a partial information content identification or corresponds to a storage address of the information identification, and the partial information content identification indicates partial information content data.

Therefore, a basis for information exchange between various services may be provided. Information transmission may be carried out at the granularity of partial information content, which reduces the data amount of information transmission and reduces the difficulty of message transmission, thereby improving the circulation of information in the second service.

It is to be noted that the index information is generated based on the identification information. Providing the user device with index information as a transmission medium instead of identification information can prevent reverse processing based on the identification information, thus improving information security.

In some embodiments, the step 302 includes: selecting at least two partial information contents from the service information body.

For example, at least two conversation messages may be selected from an instant messaging conversation interface.

In some embodiments, the step 303 includes: generating, based on the information identification of each of the selected partial information contents, first type index information for the partial information content, where the first type index information is in one-to-one correspondence with the partial information content.

For example, at least two conversation messages are selected from the instant messaging conversation interface, for example, a first conversation message and a second conversation message. First first type index information may be generated for the first conversation message, and second first type index information may be generated for the second conversation message. The partial message content is in one-to-one correspondence with the first type index information.

It is be noted that the one-to-one correspondence between the index information and partial message content may present a clear correspondence to the user, making it easier for the user to view a single piece of information. For the scenario where the user needs to view a single piece of information without viewing all the information, the one-to-one correspondence between the index information and partial messages can prevent the user from obtaining irrelated information when obtaining the desired information, reducing the amount of communication data.

In some embodiments, the step 303 includes: generating second type index information based on information identification of each of the selected at least two partial information contents, where the second type index information corresponds to the selected at least two partial information contents.

For example, at least two conversation messages are selected from the instant messaging conversation interface, for example, a first conversation message and a second conversation message. The second type index information may be generated for the first conversation message and the second conversation message. The second type index information may be used to indicate all selected partial message contents.

It is to be noted that generating one piece of index information for multiple selected partial message contents can reduce the number of operations required for the user to share the index information, improving operation efficiency.

In some embodiments, the method further includes: displaying a selection control in response to determining that the partial information content in the service information body is a predefined shareable type.

In some embodiments, the method further includes: in response to determining that the partial information content in the service information body is a predefined non-shareable type, performing at least one of the following but not limited to: not displaying the selection control; and displaying a non-selectable prompt message in response to detecting an operation on the selection control.

In some application scenarios, the shareable type and non-shareable type may be predefined. It is to be noted that the basis for dividing whether different service scenarios may be shared may be specifically set based on the service scenario.

For example, in an instant messaging service scenario, confidential messages, system messages, messages that have not been sent successfully, etc. may be set as non-shareable types.

Here, for some information contents of non-shareable type, the selection control may not be displayed, or the selection control may be displayed but a prompt message is displayed when the user triggers the selection control. The prompt information may indicate that the content of this part of information cannot be selected.

It is be noted that setting whether some information contents are selectable can avoid sharing confidential or inaccurate information to the first service interface, thereby improving the security of information in the second service interface and improving accuracy of information shared to the first service interface.

In some embodiments, the method further includes: exporting the index information to the first service interface in response to detecting an export operation on the index information.

For example, the user may copy index information from the second service interface, and paste the copied index information to the first service interface. The export operation may be a copy operation and a paste operation.

For another example, the user may select a partial information content (such as a piece of text in an online document) in the second service interface, and select a sharing object (such as a group "lunch group"), and send the index information of the selected partial information content to the sharing object, and the first service interface displaying the sharing object may receive the index information. Here, the export operation may include operations of selecting a sharing object and sending index information to the sharing object.

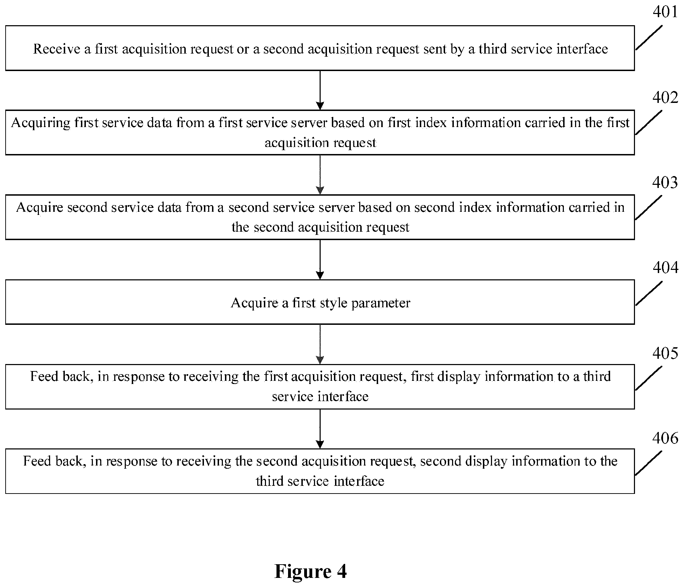

Reference is made to Figure 4, which shows a flow of an information interaction method according to another embodiment of the present disclosure. As shown in Figure 4, the information interaction method includes the following steps 401 to 406.

In step 401, a first acquisition request or a second acquisition request sent by a third service interface is received.

In an embodiment, the third service interface may be a service interface of any service type.

In an embodiment, the first acquisition request is used to request to acquire display information corresponding to the first service.

In an embodiment, the second acquisition request is used to request to acquire display information corresponding to the second service.

For example, the third service interface is an online document interface. The first service is an instant messaging service, and the second service is an email service. The first acquisition request is used to request display information of the conversation message of the instant messaging service in the online document interface. The second acquisition request is used to request display information of the email in the online document interface.

In step 402, first service data is acquired from the first service server based on first index information carried in the first acquisition request.

In step 403, second service data is acquired from the second service server based on second index information carried in the second acquisition request.

In step 404, a first style parameter is acquired.

Here, the first style parameter indicates display style information when displaying the first service data and the second service data in the third service interface.

In some application scenarios, the server may verify the received first index information. The server may verify whether the first index information meets a format requirement, and determine whether the service data may be acquired from the corresponding service server in a case that the first index information meets the format requirement. If the service data may be acquired from the corresponding service server, the corresponding service data may be acquired, and if the service data cannot be acquired from the corresponding service server, displaying may be performed in a preset manner, and the display information in the preset display manner may be related to the first style parameter, but is independent of the service data. It may be understood that the second index information has the same processing manner.

For example, the display information in the preset display manner may indicate to generate an information card in a uniform style, and information displayed on the information card is used to indicate that information content corresponding to the index cannot be acquired.

In step 405, first display information is fed back to the third service interface in response to receiving the first acquisition request.

In some embodiments, the first display information is used to indicate the third service interface to display the first service data based on the first style parameter.

Here, the first display information includes at least one of the following but not limited to: the first service data, the first style parameter, and first service display data. The first service display data is generated based on the first service data and the first style parameter.

In some application scenarios, one or both of the first service data and the first style parameter may be fed back to the third service interface as the first display information.

In some application scenarios, the first service display data may be generated based on the first service data and/or the first style parameter, and the first service display data may be sent to the third service interface as the first display information.

In step 406, second display information is fed back to the third service interface in response to receiving the second acquisition request.

In some embodiments, the second display information is used to indicate the third service interface to display the second service data based on the first style parameter.

Here, the second display information includes at least one of the following but not limited to: the first service data, the first style parameter, and second service display data. The second service display data is generated based on the second service data and the first style parameter.

In some application scenarios, one or both of the second service data and the first style parameter may be fed back to the third service interface as the second display information.

In some application scenarios, the second service display data may be generated first based on the second service data and/or the first style parameter, and then sent to the third service interface as the second display information.

In some application scenarios, a preset first style parameter is acquired in response to receiving a target acquisition request including index information, where the target acquisition request is sent by at least two types of service interfaces; target service data is acquired based on partial information content indicated by the index information; and first display information corresponding to the target index is generated based on the first style parameter and the acquired target service data.

It is to be noted that each service scenario independently parses and renders the received index information. Therefore, in the embodiment, a unified first style parameter is provided to parse and render the index information of various service scenarios, thereby reducing the set algorithms of rendering and parsing, thus reducing costs. In addition, the service scenarios use the unified first style, thereby providing the basis for information interaction between various service scenarios.

In some embodiments, the first display information is used to indicate to display the first service data based on the first style parameter and the second style parameter corresponding to the first service, and the second display information is used to indicate to display the second service data based on the first style parameter and the second style parameter corresponding to the second service.

In some embodiments, the first display information includes the second style parameter corresponding to the first service, and the second display information includes the second style parameter corresponding to the second service.

In some embodiments, the method further includes: pre-storing a correspondence between service identification information of at least one service party and the second style parameter; receiving the first acquisition request, and extracting first index information from the first acquisition request, where the first index information indicates preset service data of a first service; determining service identification information of the first service based on the first index information; and determining a second style parameter corresponding to the first service based on service party identification information of the first service and the corresponding correspondence.

In some embodiments, the service party needs to register with the server in advance, and the registration content includes providing service identification information (such as URL), providing the second style parameter, and providing data transmission interface information. The specific parameter item of the second style parameter may be provided by the server party according to actual needs, and the service party may provide a parameter value of each parameter item according to an actual application scenario of the service. The data transmission interface information is used to indicate the service server to provide an interface for service data.

In some application scenarios, if the service party identification of the first index information in the first acquisition request is not included in the pre-stored service identification information of the service party, a preset display style may be displayed. In other words, if the service party does not provide the second style parameter, a default style may be used for display.

In some application scenarios, for each of received at least one target acquisition request, service identification information corresponding to the index information in the acquisition request is determined from the preset service identification information, where each service identification information pre-stores corresponding second style parameter, and first display information is generated based on the first style parameter, the partial information content, and the determined second style parameter corresponding to the determined service identification information.

It is to be noted that, the first display information corresponding to the service scenario is generated by using the second style parameter corresponding to the service scenario, the display information can have personalized features suitable for the service scenario, and the first display information can adapt to the needs of the service scenario, thereby improving the accuracy of information transmission in the service scenario.

In some embodiments, the second style parameter includes at least one of a parsing parameter, a rendering parameter and a permission parameter.

Here, the parsing parameter is used to indicate a manner of generating parsing information based on the target index information. The rendering parameter is used to indicate a rendering manner for generating service data. The permission parameter is used to indicate a permission verification manner.

In some application scenarios, parsing index information may refer to parsing index information into text hyperlinks. In other words, the parsing parameter may be used to indicate whether the index information needs to be parsed, and the parsing style is a hyperlink that may be customized by the service party.

For example, the parsing the index information may include extracting part of the body or summary information based on the content of the service data indicated by the index information, and constructing the index information as a hyperlink. The user gets a preliminary understanding of page information through the text content included in the hyperlink. The hyperlink may include a head element and/or a tail element. For example, the head element may indicate a service type, and the tail element may indicate a type of service data content (for example, an unfinished document). The hyperlink may be triggered by the user to jump to the service interface of the service indicated by the corresponding index.

In some application scenarios, the rendering the index information may refer to rendering the service data corresponding to the index information into a form that users can directly view, which may include but not limited to at least one of the following: cards, pictures, videos, and interaction controls. In other words, rendering may indicate whether index information needs to be rendered. The rendering parameter may include at least one of the following but are not limited to: a layout (typesetting and layout of the rendered content), static elements (static elements required when constructing the rendered content), components (components required when constructing the rendered content), interaction manner (defining the interaction manner and jump logic of the component).

In some application scenarios, content arrangement templates of different services have different layout styles. The service party may adjust the element content within the scope of the layout provided by the server according to actual needs. Static elements and interaction controls may be combined in a preset layout way to enrich the presentation effect of the first display information.

For example, the server may provide the following layouts, but not limited to: a top-bottom layout, a column layout and a flow layout.

In some application scenarios, the static element may refer to a content that is allowed to be rendered.

In some application scenarios, the interaction manner may refer to a corresponding interaction manner after the user operates the interaction control. In addition, after the content is inputted during interaction, the content will not be saved, and the inputted content may be deleted after exiting the interaction.

In some application scenarios, the permission parameter may define a rendering style, a parsing style, and a displayed content when having permission, and may also define a rendering style, a parsing style, and a displayed content when having no permission.

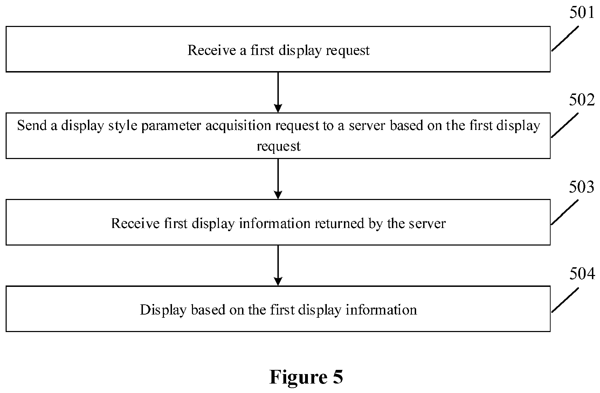

Reference is made to Figure 5, which shows a flow of an information interaction method according to another embodiment of the present disclosure. As shown in Figure 5, the information interaction method includes the following steps 501 to 504.

In step 501, a first display request is received.

Here, the first display request is used to display first service data of a first service in a third service interface.

Here, the first service is another type of service other than the third service.

For example, the third service interface may include an online documentation interface. The first service may include an instant messaging service, and the first service data may include conversation messages in an instant messaging interface. The first service may also be an email service, and the first service data may include email content.

In step 502, a display style parameter acquisition request is sent to the server based on the first display request.

Here, the display style parameter acquisition request carries first index information, and the first index information indicates the first service data.

In step 503, first display information returned by the server is received.

In some embodiments, the first display information is used to indicate the third service interface to display the first service data based on the first style parameter.

In some embodiments, the first display information may include but not limited to at least one of the first service data, the first style parameter, and first service display data, and the first service display data is generated based on the first service data and the first style parameter.

In step 504, displaying is performed based on the first display information.

Here, an image indicated by the first display information may be displayed.

In some embodiments, the first display information includes a second style parameter corresponding to the first service. Here, the server pre-stores a correspondence between service identification information of at least one service party and the second style parameter; determines service identification information of the first service based on the first index information; and determines a second style parameter corresponding to the first service based on the service party identification information of the first service and the correspondence.

In some embodiments, the second style parameter may include but not limited to at least one of a parsing parameter, a rendering parameter and a permission parameter.

Here, the parsing parameter is used to indicate a manner of generating parsing information based on the target index information. The rendering parameter is used to indicate a rendering manner for generating service data. The permission parameter is used to indicate a permission verification manner.

It is to be noted that, the first display information corresponding to the service scenario is generated by using the second style parameter corresponding to the service scenario, the display information can have personalized features suitable for the service scenario, and the first display information can adapt to the needs of the service scenario, thereby improving the accuracy of information transmission in the service scenario.

In some embodiments, the step 504 may include: starting a layout thread, and processing the first display information by using the layout thread to obtain first layout data; and painting and displaying the first display information based on the first layout data.

In some application scenarios, layout and painting are two most important steps in the critical rendering path and consuming most resources. The layout thread calculates the precise position and size of each node based on the rendering tree, and the layout focuses on information of the shape and size of the elements.

In some application scenarios, painting is a process of pixelating each node to paint an element onto a page.

In some application scenarios, the critical path will be traversed once on the first load of the page. In some operations in the subsequent interactions of the user, the two steps (layout and painting) may not be performed. For example, some style changes will not trigger layout and painting. Layout focus on position and size, such as the width and height and offset of elements, and the layout will only be triggered when these geometric information changes. However, painting involves parameters such as changes in the color and shadow of elements. When parameters such as changes in the color and shadow of elements change, the layout will not be triggered, but only the painting will be triggered.

Here, the layout thread is independent from the system rendering thread corresponding to an application.

It is to be noted that the thread for laying out the first display information exists independently of the layout thread of the application, which can avoid the mutual influence between the layout of the first display information and the layout of the application and thus reduce the layout speed, so as to ensure a calculation speed of the layout of the first display information and application, thereby improving the speed of displaying the first display information and the application.

In some embodiments, the starting a layout thread, and processing the first display information by using the layout thread to obtain first layout data includes: starting a first layout thread in response to receiving the first display request and the second display request, to process the first display information received based on the first display request, and starting a second layout thread to process the second display information received based on the second display request information.

In the embodiment, the first display request and the second display request may be used to request to display the same or different types of service data. The first and the second in the first display request and the second display request are only to distinguish the two display requests, and do not limit the types of the display requests.

It is to be noted that each received display request is processed by a separate layout thread, and the layout calculation may be performed concurrently. In the case of multiple display requests, calculation blocking may be avoided, thereby improving the speed of layout calculation and display speed of the display information.

In some embodiments, the first layout data includes predefined first-type painting data and/or second type painting data.

Here, the division of the first type painting data and the second type painting data may be set according to actual application scenarios, and is not limited here.

In some embodiments, the painting and displaying the first display information based on the first layout data includes: processing the first type painting data for painting by using a first rendering method provided by a system; and processing the second type painting data for painting by using a preset second rendering method.

Here, the second painting method may be a painting method other than the painting methods provided by the system.

It is to be noted that processing rendering tasks in parallel by using two rendering methods can not only increase the calculation speed of the rendering task, but also reduce the complexity requirements for the second rendering method by using the system method, thereby reducing the development cost incurred by the second rendering method and the computational cost of when performing the second painting method.

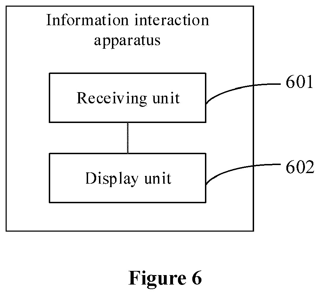

Further referring to Figure 6, as an implementation of the above methods shown in the figures, an information interaction apparatus is provided according to an embodiment of the present disclosure. This apparatus embodiment corresponds to the method embodiment shown in Figure 1, and the apparatus may specifically be applied to various electronic devices.

As shown in Figure 6, the information interaction apparatus in the embodiment includes: a receiving unit 601 and a display unit 602. The receiving unit 601 is configured to receive index information through a first service interface, where the index information indicates partial information content of a service information body displayed in a second service interface, and the service information body is an information unit for organizing service information. The display unit 602 is configured to display the partial information content and/or related information of the partial information content in the first service interface based on the partial information content acquired based on the index information.

In the embodiment, the specific processing of the receiving unit 601 and the display unit 602 of the information interaction apparatus and the technical effects thereof may refer to the related descriptions of step 101 and step 102 in the embodiment corresponding to Figure 1, which will not be repeated here.

In some embodiments, the index information is generated based on the information identification of the partial information content and is different from the information identification.

In some embodiments, the information interaction apparatus further includes: a sending unit (not shown in the figure) and a related information receiving unit (not shown in the figure). The sending unit is configured to send the index information to a first electronic device, where the first electronic device is configured to acquire the partial information content indicated by the index information and/or the related information of the partial information content from a second service server based on the index information. The related information receiving unit is configured to receive the partial information content and/or related information of the partial information content returned by the first electronic device based on the index information.

In some embodiments, the index information corresponds to the partial information content identification or corresponds to a storage address of the information identification, and the partial information content identification indicates partial information content data. The first electronic device is configured to acquire the partial information content indicated by the index information and/or the related information of the partial information content from the second service server based on the index information in the following manner: the first electronic device sends a partial information content acquisition request to a second service server, and the second service server determines partial information content identification corresponding to the index information, and acquires the partial information content and/or the related information of the partial information content from partial information content data indicated based on the partial information content identification.

In some embodiments, the information interaction apparatus further includes: a first updating unit (not shown in the figure). The first updating unit is configured to update, in response to determining that the partial information content data indicated by the partial information content identification changes, the displayed partial information content and/or related information of the partial information content based on the changed partial information content data.

In some embodiments, the information interaction apparatus is further configured to display an interaction control related to a second service in the first service interface, where the interaction control includes at least one of a viewing control, a jump control, a feedback control and a translation control. The information interaction apparatus further includes at least one of the following: a second presenting unit (not shown in the figure), a third presenting unit (not shown in the figure), a second updating unit (not shown in the figure) and a fourth presenting unit (not shown). The second presenting unit is configured to display, in response to detecting a trigger operation on the viewing control, the partial information content in the first service interface. The third presenting unit is configured to display, in response to detecting a trigger operation on the jump control, the second service interface where the partial information content is located. The second updating unit is configured to receive, in response to detecting a trigger operation on the feedback control, first feedback information implemented in the first service interface, and send the first feedback information to the second service interface to update the second service interface. The fourth presenting unit is configured to display the partial information content and/or related information of the partial information content in a target language in response to detecting a trigger operation on the translation control.

In some embodiments, the related information of the partial information content includes at least one of the following: a user identification associated with the partial information content, and second feedback information for the partial information content.

In some embodiments, the first service interface includes at least one of the following: an instant messaging conversation interface, an online document interface, an email interface, a schedule information interface, and a conference information interface, and the service information body includes at least one of the following: an instant messaging conversation, an online document, an email, schedule information, conference information.

In some embodiments, the information interaction apparatus further includes: a fifth presenting unit (not shown in the figure), a selecting unit (not shown in the figure), and a generating unit (not shown in the figure). The fifth presenting unit is configured to display the service information body in the second service interface. The selecting unit is configured to select the partial information content from the service information body. The generating unit is configured to generate index information based on the information identification of the selected partial information content.

In some embodiments, the selecting unit is further configured to select the partial information content from the service information body in the following manner: selecting at least two partial information contents from the service information body; and generating the index information based on information identification of the selected partial information contents, including at least one of the following: generating, based on information identification of each of the selected partial information contents, first type index information for the partial information content, where the first type index information is in one-to-one correspondence with the partial information content; and generating, based on information identifications of the at least two selected partial information contents, second type index information, where the second type index information corresponds to the selected at least two partial information contents.

In some embodiments, the information interaction apparatus further includes: an exporting unit (not shown in the figure). The exporting unit is configured to export the index information to the first service interface in response to detecting an export operation on the index information.

In some embodiments, the second service includes an instant messaging service, and the first service includes an online document service. The receiving unit is further configured to receive index information through the first service interface in the following manner: receiving index information indicating at least one conversation message through the online document interface, and acquiring conversation message content of the at least one conversation message and/or related information of the conversation message content. The display unit is further configured to display, based on the partial information content acquired based on the index information, the partial information content and/or related information of the partial information content in the first service interface in the following manner: displaying, based on the conversation message content acquired based on the index information, the conversation message content of the at least one conversation message and/or the related information of the conversation message content in the online document interface.

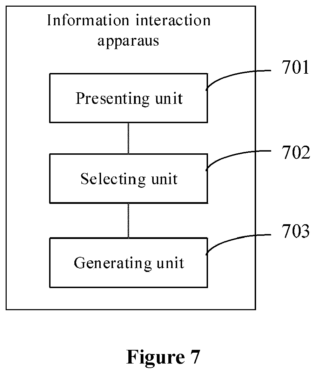

Further referring to Figure 7, as an implementation of the above methods shown in the figures, an information interaction apparatus is provided according to yet another embodiment of the present disclosure. This apparatus embodiment corresponds to the method embodiment shown in Figure 3, and the apparatus may specifically be applied to various electronic devices.

As shown in Figure 7, the information interaction apparatus of the embodiment includes: a presenting unit 701, a selecting unit 702 and a generating unit 703. The presenting unit 701 is configured to display, in a second service interface, a service information body, where the service information body is an information unit for organizing service information. The selecting unit 702 is configured to select partial information content from the service information body. The generating unit 703 is configured to generate index information based on information identification of the selected partial information content, to process the partial information content based on the index information.

In the embodiment, the specific processing of the presenting unit 701, the selecting unit 702, and the generating unit 703 of the information interaction apparatus and the technical effects thereof may refer to related descriptions of the steps 301, 302, and 303 in the corresponding embodiment in Figure 3, which will not be repeated here.

In some embodiments, the selecting unit 702 is further configured to select the partial information content from the service information body in the following manner: selecting at least two partial information contents from the service information body. The generating unit 703 is further configured to generate index information based on the information identification of the selected partial information content in the following manner: generating, based on information identification of each of the selected partial information contents, first type index information for the partial information content, where the first type index information is in one-to-one correspondence with the partial information content.

In some embodiments, the selecting unit 702 is further configured to select the partial information content from the service information body in the following manner: selecting at least two partial information contents from the service information body. The generating unit 703 is further configured to generate index information based on the information identification of the selected partial information content in the following manner: generating, based on information identifications of the at least two selected partial information contents, a second type index information, where the second type index information corresponds to the selected at least two partial information contents.

In some embodiments, the information interaction apparatus further includes: a selection control presenting unit (not shown in the figure) and an execution unit (not shown in the figure). The selection control presenting unit is configured to display a selection control in response to determining that the partial information content in the service information body is a predefined shareable type. The execution unit is configured to perform, in response to determining that the partial information content in the service information body is a predefined non-shareable type, at least one of the following: not displaying the selection control; and displaying a non-selectable prompt message in response to detecting a trigger operation on the selection control.

In some embodiments, the information interaction apparatus further includes an exporting unit (not shown in the figure). The exporting unit is configured to export the index information to the first service interface in response to detecting an export operation on the index information.

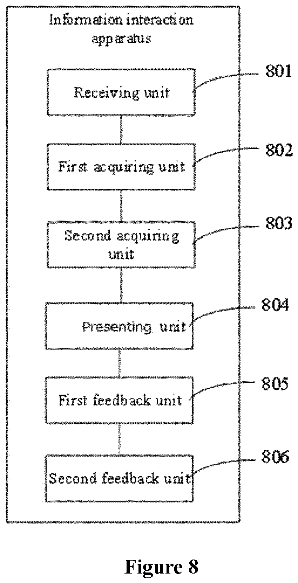

Further referring to Figure 8, as an implementation of the above methods shown in the figures, an information interaction apparatus is provided according to another embodiment of the present disclosure. This apparatus embodiment corresponds to the method embodiment shown in Figure 4, and the apparatus may specifically be applied to various electronic devices.

As shown in Figure 8, the information interaction apparatus of the embodiment includes: a receiving unit 801, a first acquiring unit 802, a second acquiring unit 803, a presenting unit 804, a first feedback unit 805 and a second feedback unit 806. The receiving unit 801 is configured to receive a first acquisition request or a second acquisition request sent by a third service interface. The first acquiring unit 802 is configured to acquire first service data from a first service server based on first index information carried in the first acquisition request. The second acquiring unit 803 is configured to acquire second service data from a second service server based on second index information carried in the second acquisition request. The presenting unit 804 is configured to acquire a first style parameter, where the first style parameter indicates a display style when displaying the first service data and the second service data in the third service interface. The first feedback unit 805 is configured to feeding back, in response to receiving the first acquisition request, first display information to a third service interface, where the first display information includes at least one of the first service data, the first style parameter, and first service display data, and the first service display data is generated based on the first service data and the first style parameter. The second feedback unit 806 is configured to feedback, in response to receiving the second acquisition request, second display information to the third service interface, where the second display information includes at least one of the first service data, the first style parameter, and second service display data, and the second service display data is generated based on the second service data and the first style parameter.

In the embodiment, the specific processing of the receiving unit 801, the first acquiring unit 802, the second acquiring unit 803, the presenting unit 804, the first feedback unit 805 and the second feedback unit 806 of the information interaction apparatus and the technical effects thereof may refer to the related descriptions of steps 401, 402, 403, 404, 405, and 406 in the embodiment corresponding to Figure 4, which will not be repeated here.

In some embodiments, the first display information includes a second style parameter corresponding to the first service, and the second display information includes a second style parameter corresponding to the second service. The information interaction apparatus further includes: a storage unit (not shown in the figure), an extraction unit (not shown in the figure), a first determining unit (not shown in the figure) and a second determining unit (not shown in the figure). The storage unit is configured to pre-store a correspondence between service identification information of at least one service party and the second style parameter. The extraction unit is configured to receive a first acquisition request, and extract first index information from the first acquisition request, where the first index information indicates preset service data of the first service. The first determining unit is configured to determine service identification information of the first service based on the first index information. The second determining unit is configured to determine a second style parameter corresponding to the first service based on service party identification information of the first service and the correspondence.

In some embodiments, the second style parameter includes at least one of a parsing parameter, a rendering parameter, and a permission parameter, where the parsing parameter is used to indicate a manner of generating parsing information based on target index information, the rendering parameter is used to indicate a rendering manner for generating first related information, and the permission parameter is used to indicate a permission verification manner.

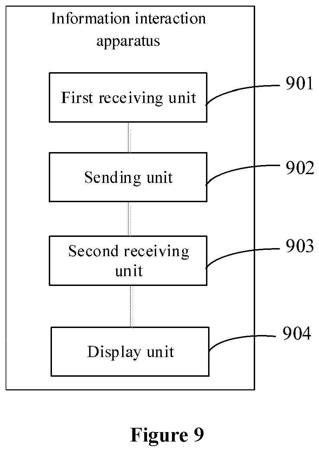

Further referring to Figure 9, as an implementation of the above methods shown in the figures, an information interaction apparatus is provided according to another embodiment of the present disclosure. This apparatus embodiment corresponds to the method embodiment shown in Figure 5, and the apparatus may specifically be applied to various electronic devices.

As shown in Figure 9, the information interaction apparatus in the embodiment includes: a first receiving unit 901, a sending unit 902, a second receiving unit 903 and a display unit 904. The first receiving unit 901 is configured to receive a first display request, where the first display request is used to display first service data of a first service in a third service interface, where the first service has a service type other than that of the third service. The sending unit 902 is configured to send a display style parameter acquisition request to a server based on the first display request, where the display style parameter acquisition request carries first index information, and the first index information indicates the first service data. The second receiving unit 903 is configured to receive first display information returned by the server, where the first display information includes at least one of the first service data, the first style parameter, and first service display data, and the first service display data is generated based on the first service data and the first style parameter. The display unit 904 is configured to display based on the first display information.

In the embodiment, the specific processing of the first receiving unit 901, the sending unit 902, the second receiving unit 903, and the display unit 904 of the information interaction apparatus and the technical effects thereof may refer to the related descriptions of step 501, step 502, step 503, and step 504 in the corresponding embodiment in Figure 5, which will not be repeated here.

In some embodiments, the first display-related information includes a second style parameter corresponding to the first service. The server: pre-stores a correspondence between the service identification information of at least one service party and the second style parameter; determines service identification information of the first service based on the first index information; and determines a second style parameter corresponding to the first service based on service party identification information of the first service and the correspondence.

In some embodiments, the displaying based on the first display information includes: starting a layout thread, and processing the first display information by using the layout thread to obtain first layout data, where the layout thread is independent of a system rendering thread corresponding to an application; and painting and displaying the first display information based on the first layout data.

In some embodiments, the starting a layout thread, and processing the first display information by using the layout thread to obtain first layout data includes: starting a first layout thread in response to receiving the first display request and the second display request, to process the first display information received based on the first display request, and starting a second layout thread to process the second display information received based on the second display request information.

In some embodiments, the first layout data includes predefined first type painting data and/or second type painting data. The painting and displaying the first display information based on the first layout data includes: processing the first type painting data for painting by using a first rendering method provided by a system; and processing the second type painting data for painting by using a preset second rendering method.

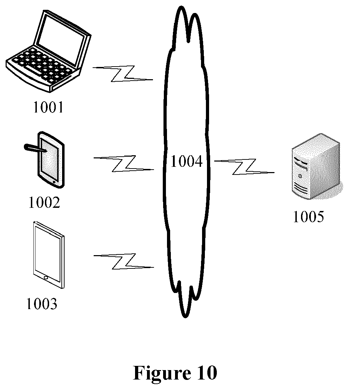

Reference is made to Figure 10, which shows an exemplary system architecture to which the information interaction method according to an embodiment of the present disclosure may be applied.

As shown in Figure 10, the system architecture may include terminal devices 1001, 1002, and 1003, a network 1004, and a server 1005. The network 1004 is used as a medium for providing communication links between the terminal devices 1001, 1002, 1003 and the server 1005. The network 1004 may include various connection types, such as wire, wireless communication links, or fiber optic cables.

The terminal devices 1001, 1002, 1003 may interact with the server 1005 through the network 1004 to receive or send messages and the like. Various client applications, such as web browser applications, search applications, and news information applications, may be installed on the terminal devices 1001, 1002, and 1003. The client applications in the terminal devices 1001, 1002, and 1003 may receive instructions from users, and perform corresponding functions based on instructions from the users, for example, adding corresponding information to information based on the instructions from the users.

The terminal devices 1001, 1002, and 1003 may be hardware or software. If the terminal devices 1001, 1002, and 1003 are hardware, the terminal devices 1001, 1002, and 1003 may be various electronic devices with display screens and supporting web browsing, including but not limited to smartphones, tablet computers, e-book readers, Moving Picture Experts Group Audio Layer III (MP3) players, Moving Picture Experts Group Audio Layer IV (MP4) players, laptop portable computers and desktop computers, etc. If the terminal devices 1001, 1002, and 1003 are software, the terminal devices 1001, 1002, and 1003 may be installed in the electronic devices listed above. The terminal devices 1001, 1002, and 1003 may be implemented as multiple software or software modules (such as software or software modules for providing distributed services), or as a single software or software module, which is not specifically limited here.

The server 1005 may provide various services, for example, receiving information acquisition requests sent by the terminal devices 1001, 1002, and 1003, and acquiring display information corresponding to the information acquisition requests in various ways based on the information acquisition requests, and send related data of the display information to the terminal devices 1001, 1002, 1003.

It is to be noted that the information interaction method according to the embodiment of the present disclosure may be executed by a terminal device, and correspondingly, the information interaction apparatus may be arranged in the terminal devices 1001, 1002, and 1003. In addition, the information interaction method according to the embodiment of the present disclosure may also be executed by the server 1005, and correspondingly, the information interaction apparatus may be arranged in the server 1005.

It is to be understood that the numbers of terminal devices, networks and servers in Figure 10 are only illustrative. According to the implementation needs, there may be any number of terminal devices, networks and servers.

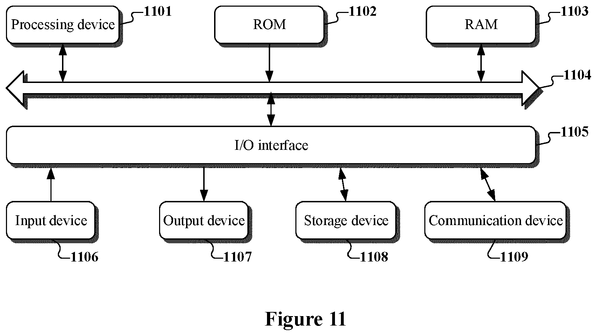

Next, reference is made to Figure 3, which is a schematic structural diagram of an electronic device (for example, the terminal device or the server as shown in Figure 10) suitable for implementing an embodiment of the present disclosure. The terminal devices of the embodiment of the present disclosure may include, but is not limited to, mobile terminals such as mobile phones, notebook computers, digital broadcast receivers, personal digital assistants (PDAs), tablets (PADs), portable multimedia players (PMPs), vehicle-mounted terminals (such as in-vehicle navigation terminals), and stationary terminals such as digital TVs, desktop computers. The electronic device shown in Figure 11 is only an example, and should not impose any limitation on the function and use scope of the embodiments of the present disclosure.

As shown in Figure 11, the electronic device may include a processing device 1101 (for example, a central processor, a graphics processor, and the like), which may perform various appropriate actions and processing according to programs stored in a read-only memory (ROM) 1102 or programs loaded into a random access memory (RAM) 1103 from a storage device 1108. In the RAM 1103, various programs and data required for the operation of the electronic device 1100 are also stored. The processing device 1101, the ROM 1102 and the RAM 1103 are connected to each other through a bus 1104. The input/output (I/O) interface 1105 is also connected to the bus 1104.

Generally, the following devices may be connected to the I/O interface 1105: an input device 1106 including, for example, a touch screen, a touch pad, a keyboard, a mouse, a camera, a microphone, an accelerometer, a gyroscope, and the like; an output device 1107 including, for example, a liquid crystal display (LCD), a loudspeaker, a vibrator, and the like; a storage device 1108 including, for example, a tape, a hard disk, and the like; and a communication device 1109. The communication device 1109 may allow electronic device 1100 to communicate wirelessly or wirelessly with other devices to exchange data. Although Figure 11 shows an electronic device 1100 with various devices, it is to be understood that it is unnecessary to implement or have all the devices shown. Alternatively, more or fewer devices may be implemented or provided.

Specifically, according to some embodiments of the present disclosure, the process described above with reference to the flowchart may be implemented as a computer software program. For example, an embodiment of the present disclosure provides a computer program product, which includes a computer program stored on a non-transitory computer-readable medium. The computer program includes program codes for executing the method in the embodiments. In such embodiments, the computer program may be downloaded and installed from the network through the communication device 1109, or installed from the storage device 1108, or installed from the ROM 1102. When the computer program is executed by the processing device 1101, the functions defined in the method of the embodiments of the present disclosure are executed.

It is to be noted that the computer readable storage medium according to the present disclosure may be a computer readable signal medium or a computer readable storage medium or a combination thereof. The computer readable storage medium may include, but is not limited to, a system, an apparatus, or a device in an electronic, magnetic, optical, electromagnetic, infrared, or semi-conductive form, or any combination thereof. Further, the computer readable storage medium may be, but is not limited to, an electrical connection with one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device or any combination thereof. In the present disclosure, the computer readable storage medium may be any tangible medium containing or storing a program, and the program may be used by or in combination with an instruction execution system, apparatus, or device. In the present disclosure, the computer readable signal medium may include a data signal transmitted in a baseband or transmitted as a part of a carrier wave and carrying computer readable program codes. The transmitted data signal may be in various forms, including but not limited to an electromagnetic signal, an optical signal or a combination thereof. The computer readable signal medium may be any computer readable medium other than the computer readable storage medium, and can send, propagate or transmit programs to be used by or in combination with an instruction execution system, apparatus or device. The program codes stored in the computer readable medium may be transmitted via any proper medium including but not limited to: a wire, an optical cable, radio frequency (RF) and the like, or any combination thereof.

In some embodiments, the client and the server may perform communication using any currently known or future developed network protocol such as HyperText Transfer Protocol (HTTP), and may be interconnected with a digital data communication (for example, a communication network) in any form or by any medium. Examples of the communication network include a local area network (LAN), a wide area network (WAN), the Internet Work (for example, the Internet), and a peer-to-peer network (for example, an ad hoc peer-to-peer network), as well as any currently known network or a future developed network.

The computer readable medium may be incorporated in the electronic device, or may exist alone without being assembled into the electronic device.

The computer readable medium carries one or more programs. The one or more programs, when executed by the electronic device, cause the electronic device to perform steps of: receiving index information through a first service interface, where the index information indicates a partial information content of a service information body displayed in a second service interface, and the service information body is an information unit for organizing service information; and displaying, based on the partial information content acquired based on the index information, the partial information content and/or related information of the partial information content in the first service interface.

The one or more programs, when executed by the electronic device, cause the electronic device to perform steps of: displaying, in a second service interface, a service information body, where the service information body is an information unit for organizing service information; selecting partial information content from the service information body; and generating index information based on information identification of the selected partial information content, to process the partial information content based on the index information.

The one or more programs, when executed by the electronic device, cause the electronic device to perform steps of: receiving a first acquisition request or a second acquisition request sent by a third service interface; acquiring first service data from a first service server based on first index information carried in the first acquisition request; acquiring second service data from a second service server based on second index information carried in the second acquisition request; acquiring a first style parameter, where the first style parameter indicates a display style when displaying the first service data and the second service data in the third service interface; feeding back, in response to receiving the first acquisition request, first display information to a third service interface, where the first display information is used to indicate the third service interface to display the first service data based on the first style parameter; and feeding back, in response to receiving the second acquisition request, second display information to the third service interface, where the second display information is used to indicate the third service interface to display the second service data based on the first style parameter.

The one or more programs, when executed by the electronic device, cause the electronic device to perform steps of: receiving a first display request, where the first display request is used to display first service data of a first service in a third service interface, where the first service is of a service type other than the third service; sending a display style parameter acquisition request to a server based on the first display request, where the display style parameter acquisition request carries first index information, and the first index information indicates the first service data; receiving first display information returned by the server, where the first display information is used to indicate the third service interface to display the first service data based on the first style parameter; and displaying based on the first display information.

Computer program codes for performing operations of some embodiments of the present disclosure may be written in one or more programming languages or any combination thereof, including but not limited to object-oriented programming languages, such as Java, Smalltalk, C++, and conventional procedural programming languages, such as the "C" language or similar programming languages. The program codes may be executed entirely or partly on a computer of a user, executed as a stand-alone software package, executed partly on the computer of the user and partly on a remote computer, or entirely on the remote computer or server. In the case of a remote computer, the remote computer may be connected to the computer of the user through any kind of network, including a local area network (LAN) or a wide area network (WAN), or may be connected to an external computer (for example, via an Internet connection based on an Internet service provider).

The flowchart and block diagrams in the drawings illustrate the architecture, functionality, and operation of possible implementations of systems, methods and computer program products according to the embodiments of the present disclosure. In this regard, each block in the flowchart or block diagrams may represent a module, a segment, or a portion of code that contains executable instructions for implementing the specified logical functions. It is also to be noted that, in some alternative implementations, the functions noted in the blocks may be executed out of the order noted in the figures. For example, two blocks shown in succession may, in fact, be executed substantially concurrently, or may be executed in the reverse order, depending upon the functionality involved. It is also noted that each block of the block diagrams and/or flowchart illustrations, and combinations of blocks in the block diagrams and/or flowchart illustrations, may be implemented in dedicated hardware-based systems that perform the specified functions or operations, or may be implemented in a combination of dedicated hardware and computer instructions.

The units described in some embodiments of the present disclosure may be implemented in software or hardware. The names of these units do not constitute a definition of the unit itself in some cases. For example, the receiving unit may also be described as "a unit for receiving index information through a first service interface".

The functions described herein above may be performed, at least in part, by one or more hardware logic components. For example, without limitation, exemplary types of hardware logic components that may be used include: Field Programmable Gate Arrays (FPGAs), Application Specific Integrated Circuits (ASICs), Application Specific Standard Products (ASSPs), Systems on Chips (SOCs), Complex Programmable Logical Devices (CPLDs) and the like.

In the context of the present disclosure, a machine-readable medium may be a tangible medium that may contain or store a program for use by or in connection with the instruction execution system, apparatus or device. The machine-readable medium may be a machine-readable signal medium or a machine-readable storage medium. The machine-readable medium may include, but is not limited to, systems, apparatuses, or devices in an electronic, magnetic, optical, electromagnetic, infrared, or semiconductor form, or any suitable combination thereof. Specific examples of the machine-readable storage medium may include an electrical connection with one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), a light storage device, a magnetic storage device or any combination thereof.

The above description merely illustrates the embodiments of the present disclosure and the used technical principles. Those skilled in the art should understand that the scope of present disclosure is not limited to the technical solutions formed by any combination of the above-mentioned technical features, and should also cover other technical solutions formed by any combination of the above-mentioned technical features and any equivalent features without departing from the above disclosed concept, for example, a technical solution formed by replacing the above features with the technical features disclosed in the embodiments of the present disclosure (but not limited to) with similar functions.

In addition, although operations are described in a particular order, this should not be construed as that the operations be performed in the particular order or in a sequential order. Under certain circumstances, multitasking and parallel processing may be advantageous. Further, although the above description contains several implementation-specific details, these should not be construed as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combinations.

Although the subject matter has been described in language specific to structural features and/or logical acts of methods, it is to be understood that the subject matter defined in the claims is not necessarily limited to the specific features or acts described above. Rather, the specific features and acts described above are merely example forms of implementing the claims.

## Claims

1. An information interaction method, comprising:
receiving index information through a first service interface, wherein the index information indicates a partial information content of a service information body displayed in a second service interface, and the service information body is an information unit for organizing service information; and
displaying, based on the partial information content acquired based on the index information, the partial information content and/or related information of the partial information content in the first service interface.

2. The method according to claim 1, wherein the index information is generated based on an information identification of the partial information content and is different from the information identification.

3. The method according to claim 1, further comprising:
sending the index information to a first electronic device, wherein the first electronic device acquires, from a second service server, the partial information content indicated by the index information and/or the related information of the partial information content based on the index information; and
receiving the partial information content and/or related information of the partial information content returned by the first electronic device based on the index information.

4. The method according to claim 3, wherein the index information corresponds to a partial information content identification or corresponds to a storage address of the information identification, and the partial information content identification indicates partial information content data, wherein
the first electronic device acquires, from a second service server, the partial information content indicated by the index information and/or the related information of the partial information content based on the index information in the following manner:
the first electronic device sends a partial information content acquisition request to the second service server, and the second service server determines the partial information content identification corresponding to the index information, and acquires the partial information content and/or the related information of the partial information content from the partial information content data indicated by the partial information content identification.

5. The method according to claim 2, further comprising:
updating, in response to determining that the partial information content data indicated by the partial information content identification changes, the displayed partial information content and/or related information of the partial information content based on the changed partial information content data.

6. The method according to claim 1, wherein the displaying, based on the partial information content acquired based on the index information, the partial information content and/or related information of the partial information content in the first service interface comprises:
displaying, in the first service interface, an interaction control related to a second service, wherein the interaction control comprises at least one of a viewing control, a jump control, a feedback control, and a translation control, and wherein
the method further comprises at least one of the following:
displaying the partial information content in the first service interface in response to detecting a trigger operation on the viewing control;
displaying the second service interface where the partial information content is located in response to detecting a trigger operation on the jump control;
receiving first feedback information implemented in the first service interface in response to detecting a trigger operation on the feedback control, and sending the first feedback information to the second service interface to update the second service interface; and
displaying the partial information content and/or the related information of the partial information content in a target language in response to detecting a trigger operation on the translation control.

7. The method according to claim 1, wherein the related information of the partial information content comprises at least one of the following: a user identification associated with the partial information content, and second feedback information for the partial information content.

8. The method according to claim 1, wherein
the first service interface comprises at least one of the following: an instant messaging conversation interface, an online document interface, an email interface, a schedule information interface, and a conference information interface, and the service information body comprises at least one of the following: an instant messaging conversation, an online document, an email, schedule information, conference information.

9. The method according to claim 1, further comprising:
displaying the service information body in the second service interface;
selecting the partial information content from the service information body; and
generating index information based on information identification of the selected partial information content.

10. The method according to claim 9, wherein the selecting the partial information content from the service information body comprises:
selecting at least two partial information contents from the service information body, and wherein
the generating index information based on information identification of the selected partial information content comprises at least one of the following:
generating, based on information identification of each of the selected partial information contents, first type index information for the partial information content, wherein the first type index information is in one-to-one correspondence with the partial information content; and
generating, based on information identification of the at least two selected partial information contents, second type index information, wherein the second type index information corresponds to the selected at least two partial information contents.

11. The method according to claim 9, further comprising:
exporting the index information to the first service interface in response to detecting an export operation for the index information.

12. The method according to claim 1, wherein a second service comprises an instant messaging service, and a first service comprises an online document service, and
the receiving index information in a first service interface comprises:
receiving, through an online document interface, index information indicating at least one conversation message, and acquiring conversation message content of the at least one conversation message and/or related information of the conversation message content,
the displaying, based on the partial information content acquired based on the index information, the partial information content and/or related information of the partial information content in the first service interface comprises:
displaying, based on the conversation message content acquired based on the index information, the conversation message content of the at least one conversation message and/or the related information of the conversation message content in the online document interface.

13. An information interaction method, comprising:
displaying, in a second service interface, a service information body, wherein the service information body is an information unit for organizing service information;
selecting partial information content from the service information body; and
generating index information based on information identification of the selected partial information content, and processing the partial information content based on the index information.

14. The method according to claim 13, wherein the selecting partial information content from the service information body comprises:
selecting at least two partial information contents from the service information body, and wherein
the generating index information based on information identification of the selected partial information content comprises:
generating, based on information identification of each of the selected partial information contents, first type index information for the partial information content, wherein the first type index information is in one-to-one correspondence with the partial information content.

15. The method according to claim 13, wherein the selecting partial information content from the service information body includes:
selecting at least two partial information contents from the service information body, and wherein
the generating index information based on information identification of the selected partial information content comprises:
generating, based on information identifications of the at least two selected partial information contents, second type index information, wherein the second type index information corresponds to the selected at least two partial information contents.

16. The method according to claim 13, further comprising:
displaying a selection control in response to determining that the partial information content in the service information body is a predefined shareable type; and
performing, in response to determining that the partial information content in the service information body is a predefined non-shareable type, at least one of the following:
not displaying the selection control; and
displaying a non-selectable prompt message in response to detecting a trigger operation on the selection control.

17. The method according to claim 13, further comprising:
exporting the index information to the first service interface in response to detecting an export operation for the index information.

18. An information interaction method, comprising:
receiving a first acquisition request or a second acquisition request sent by a third service interface;
acquiring first service data from a first service server based on first index information carried in the first acquisition request;
acquiring second service data from a second service server based on second index information carried in the second acquisition request;
acquiring a first style parameter, wherein the first style parameter indicates a display style when displaying the first service data and the second service data in the third service interface;
feeding back, in response to receiving the first acquisition request, first display information to the third service interface, wherein the first display information is used to indicate the third service interface to display the first service data based on the first style parameter; and
feeding back, in response to receiving the second acquisition request, second display information to the third service interface, wherein the second display information is used to indicate the third service interface to display the second service data based on the first style parameter.

19. The method according to claim 18, wherein
the first display information comprises at least one of the first service data, the first style parameter, and first service display data, wherein the first service display data is generated based on the first service data and the first style parameter; and
the second display information comprises at least one of the first service data, the first style parameter, and second service display data, wherein the second service display data is generated based on the second service data and the first style parameter.

20. The method according to claim 18, wherein the first display information is used to indicate to display the first service data based on a second style parameter corresponding to a first service and the first style parameter, and the second display information is used to indicate to display the second service data based on a second style parameter corresponding to a second service and the first style parameter, and wherein
the method further comprises:
pre-storing a correspondence between service identification information of at least one service party and the second style parameter;
receiving the first acquisition request, and extracting first index information from the first acquisition request, wherein the first index information indicates preset service data of the first service;
determining service identification information of the first service based on the first index information; and
determining a second style parameter corresponding to the first service based on the service identification information of the first service and the correspondence.

21. The method according to claim 20, wherein the second style parameter comprises at least one of a parsing parameter, a rendering parameter, and a permission parameter, wherein the parsing parameter is used to indicate a manner of generating parsing information based on target index information, the rendering parameter is used to indicate a rendering manner for generating first related information, and the permission parameter is used to indicate a permission verification manner.

22. An information interaction method, comprising:
receiving a first display request, wherein the first display request is used to display first service data of a first service in a third service interface, wherein the first service has a service type other than that of the third service;
sending a display style parameter acquisition request to a server based on the first display request, wherein the display style parameter acquisition request carries first index information, and the first index information indicates first service data;
receiving first display information returned by the server, wherein the first display information is used to indicate the third service interface to display the first service data based on a first style parameter; and
displaying based on the first display information.

23. The method according to claim 22, wherein the first display information comprises at least one of the first service data, the first style parameter, first service display data, and the first service display data is generated based on the first service data and the first style parameter.

24. The method according to claim 22, wherein the first display information is used to indicate to display the first service data based on a second style parameter corresponding to a first service and the first style parameter, and wherein
the server performs the following steps of:
pre-storing a correspondence between service identification information of at least one service party and the second style parameter;
determining service identification information of the first service based on first index information; and
determining the second style parameter corresponding to the first service based on service identification information of the first service and the correspondence.

25. The method according to claim 22, wherein the displaying based on the first display information comprises:
starting a layout thread, and processing the first display information by using the layout thread to obtain first layout data, wherein the layout thread is independent of a system rendering thread corresponding to an application; and
painting and displaying the first display information based on the first layout data.

26. The method according to claim 25, wherein the starting a layout thread, and processing the first display information by using the layout thread to obtain first layout data comprises:
starting a first layout thread in response to receiving the first display request and the second display request, to process the first display information received based on the first display request, and starting a second layout thread to process second display information received based on the second display request.

27. The method according to claim 25, wherein the first layout data comprises predefined first type painting data and/or second type painting data, and
the painting and displaying the first display information based on the first layout data comprises:
processing the first type painting data for painting by using a first painting method provided by a system; and
processing the second type painting data for painting by using a preset second painting method.

28. An information interaction apparatus, comprising:
a receiving unit, configured to receive index information through a first service interface, wherein the index information indicates a partial information content of a service information body displayed in a second service interface, and the service information body is an information unit for organizing service information; and
a display unit, configured to display, based on the partial information content acquired based on the index information, the partial information content and/or related information of the partial information content in the first service interface.

29. An information interaction apparatus, comprising:
a presenting unit, configured to display, in a second service interface, a service information body, wherein the service information body is an information unit for organizing service information;
a selecting unit, configured to select partial information content from the service information body; and
a generating unit, configured to generate index information based on information identification of the selected partial information content, to process the partial information content based on the index information.

30. An information interaction apparatus, comprising:
a receiving unit, configured to receive a first acquisition request or a second acquisition request sent by a third service interface;
a first acquiring unit, configured to acquire first service data from a first service server based on first index information carried in the first acquisition request;
a second acquiring unit, configured to acquire second service data from a second service server based on second index information carried in the second acquisition request;
a presenting unit, configured to acquire a first style parameter, wherein the first style parameter indicates a display style when displaying the first service data and the second service data in the third service interface;
a first feedback unit, configured to feed back, in response to receiving the first acquisition request, first display information to the third service interface, wherein the first display information is used to indicate the third service interface to display the first service data based on the first style parameter; and
a second feedback unit, configured to feed back, in response to receiving the second acquisition request, second display information to the third service interface, wherein the second display information is used to indicate the third service interface to display the second service data based on the first style parameter.

31. An information interaction apparatus, comprising:
a first receiving unit, configured to receive a first display request, wherein the first display request is used to display first service data of a first service in a third service interface, wherein the first service has a service type other than that of the third service;
a sending unit, configured to send a display style parameter acquisition request to a server based on the first display request, wherein the display style parameter acquisition request carries first index information, and the first index information indicates first service data;
a second receiving unit, configured to receive first display information returned by the server, wherein the first display information is used to indicate the third service interface to display the first service data based on a first style parameter; and
a display unit, configured to display based on the first display information.

32. An electronic device, comprising:
one or more processors; and
a storage device, configured to store one or more programs, wherein
the one or more programs, when executed by the one or more processors, cause the one or more processors to perform the method according to any one of claims 1 to 12, or the method according to any one of claims 13 to 17, or the method according to any one of claims 18 to 21, or the method according to any one of claims 22 to 27.

33. A computer-readable medium, comprises a computer program stored thereon, wherein the computer program, when executed by a processor, performs the method according to any one of claims 1 to 12, or the method according to any one of claims 13 to 17, or the method according to any one of claims 18 to 21, or the method according to any one of claims 22 to 27.
